**Europäisches Patentamt**

(19) **European Patent Office**

**Office européen des brevets**

(11) Publication number: **0 290 074 B1**

(12) **EUROPEAN PATENT SPECIFICATION**

(45) Date of publication of the patent specification:
31.10.90

(51) Int. Cl.⁵: **G01N 21/90**, B65G 47/82

(21) Application number: **88200760.2**

(22) Date of filing: **20.04.88**

(54) **Conveyor device.**

(30) Priority: **05.05.87 NL 8701060**

(43) Date of publication of application:
**09.11.88 Bulletin 88/45**

(45) Publication of the grant of the patent:
**31.10.90 Bulletin 90/44**

(84) Designated Contracting States:
**DE ES FR GB IT NL**

(56) References cited:
GB-A- 1 155 976
US-A- 3 262 561
US-A- 3 428 174
US-A- 4 021 122

(73) Proprietor: **HEUFT-QUALIPLUS B.V.,**
**Arnhemstraat 34 012, NL-7418 CL Deventer(NL)**

(72) Inventor: **De Bakker, Cornelis Leonardus Maria, Burg.A.**
**Bontekoelaan 6, NL-7437 CR Bathmen(NL)**
Inventor: **Lutgendorf, Pieter Hendrik, Schrijvertje 1,**
**NL-7423 HS Deventer(NL)**

(74) Representative: **Schumann, Bernard Herman Johan et al,**
**OCTROOIBUREAU ARNOLD & SIEDSMA**
**Sweelinckplein 1, NL-2517 GK The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The invention relates to a device for conveying supplied rotational symmetrical objects, for instance bottles, over a certain distance, such that their bottom is free, for example to allow light to be shone through it for inspection purposes.

Such a device is known for instance from EP-A-O 124 164 in the name of the applicant. The object of transporting the objects in clamped suspended state may for example be that an inspection station is present at the location of the device for checking, among other things, the bottom of the passing objects.

The device known from the above mentioned European patent application takes a form such that transporting of the objects, in this case bottles suspended on their upper edge, takes place at the point of the feed-through means. The construction of this known device is such that the device is comparatively costly and that it does not lend itself to being added to an existing belt conveyor. In order to use the device drastic changes in an existing situation are therefore usually necessary.

The invention has for its object to form a device of the kind described such that it can take a simpler and cheaper form and also such that it can be added to an existing conveyor device, for example a belt conveyor.

In order to realize this aim the invention provides a device of the type referred to in the preamble which is characterized by a wheel and an arcuate guiding member concentric to the wheel and exerting together therewith a clamping force on the envelope surface of the supplied objects.

In order to enable performing of a positive handling of the objects with a large degree of reliability and to be less dependent on size tolerances of the objects for handling the wheel and/or the guiding member may be coated with a resilient layer.

For handling of at least partially cylindrical objects, for instance glass bottles or pots, the embodiment is recommended in which the wheel and/or the guiding member together grip the objects on their cylindrical surfaces such that substantially no tilting moment is exerted on the objects. In this respect an alternative embodiment can be used in which the wheel comprises two coaxially positioned discs. The use of two such discs positioned at some distance from each other can offer the additional advantage that space is still available between the discs for accommodation of, for example, a deflection element for tangential infeed and a deflection element for tangential discharge of the objects.

The resilient layer can with advantage be formed as a hollow strip of rubber-like material, for example natural rubber.

It may be advisable to make use of a variant which is characterized by means for setting the rotation speed of the wheel. Such means can comprise either a motor which may be adjustable or a brake. In the case of use of a non-driven wheel, the infeed pressure, that is, the pressure the supplied objects exert on one another, is the driving force for transporting the objects through the conveyor device according to the invention. The supply pressure can be controlled during braking, and this can also be done with the motor. In the case where a motor is used that drives the wheel at a speed such that the linear speed of the objects at the location of the conveyor device is greater than the supply speed, a spacing of the objects may even be performed at the point of the conveyor device. It will be apparent that the choice of one or more of the above mentioned possibilities is dependent on the wishes of the user.

In order to cause the infeed of the objects into the conveyor device according to the invention to run as fluently as possible, use is preferably made of an infeed guide member for tangential infeed of the objects. Use can also be made with advantage of a variant in which a discharge guide member is used for tangential discharge of the objects. In this latter case the embodiment is recommended which displays the feature that at the location of the input zone of the discharge guiding member the objects are still in contact with the wheel and the arcuate guiding member. This prevents, particularly at high conveying speeds, the exerting on the objects of tilt inertia resistances which could give rise to loss of alignment, jamming of the objects, falling over and like situations which could result in disturbances.

The invention will now be elucidated with reference to the annexed drawing, in which:

Fig. 1 shows a schematic top view of the device according to the invention;
fig. 2 is a front view;
fig. 3 is a side view.

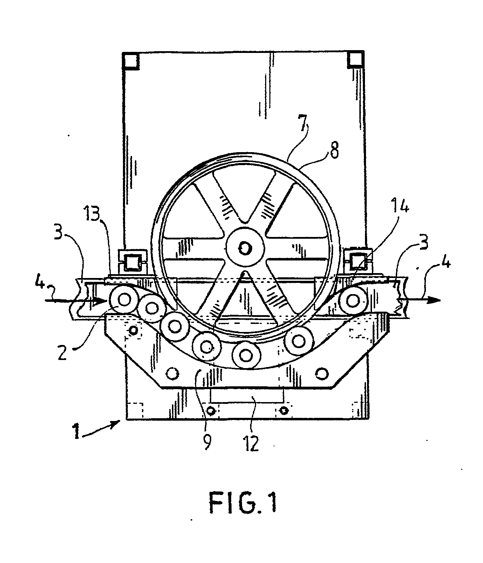

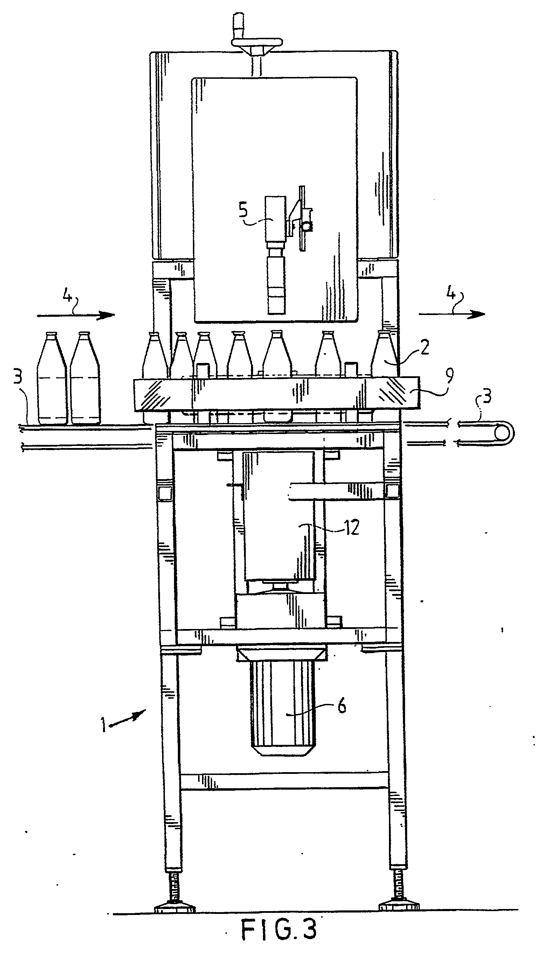

The figures 1, 2 and 3 show a device 1 for the supplying and conveying over a certain distance in clamped suspended position of glass bottles 2 which have a cylindrical portion and a more or less conical neck.

The figures show a conveyor belt 3 for supplying and carrying away the bottles 2 in the direction of arrow 4. Device 1 comprises a wheel drivable by means of a motor 6 and consisting of two discs 7, 8 and an arcuate guiding member 9 concentric thereto, which wheel and which guiding member together clamp the supplied bottles and exert a rotation torque thereon, such that the bottles are transported rotating on their axis of symmetry. Because a rotation torque is applied to the bottles on the one hand by the arcuate guiding member 9 and on the other by the wheel 7, 8, the bottles roll between these two co-operating members. In this embodiment the wheel 7, 8 is provided on its periphery for this purpose with hollow rings 10, 11 of rubber-like material, thus ensuring a positive gripping and handling of the bottles. It will be apparent that as an alternative the arcuate guiding member 9 may also be provided with such a covering.

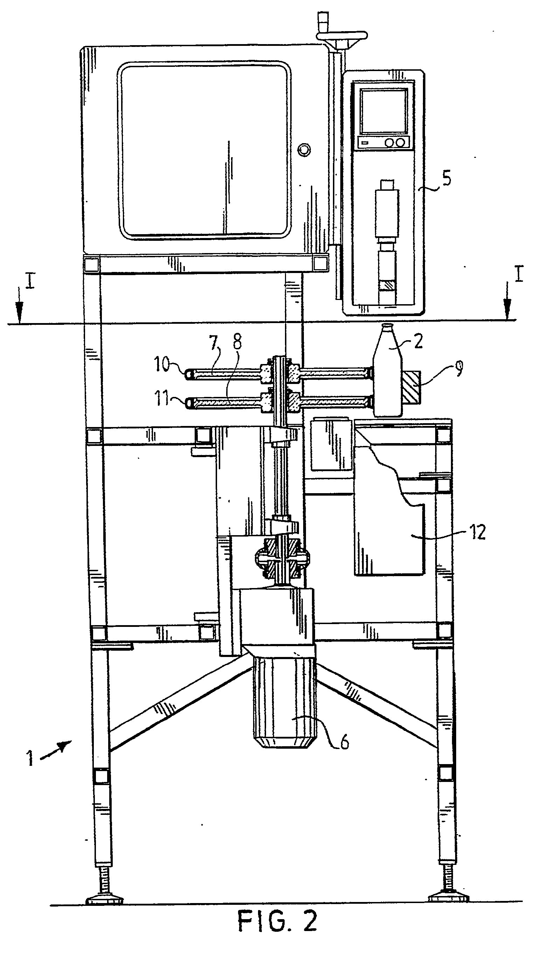

As can be seen in fig. 2 the bottles 2 are gripped on their cylindrical envelope surface by the discs 7, 8. This prevents asymmetrical inertia resistances which could give rise to a slanted conveying position of the bottles, which may be undesirable with a view to an accurate inspection.

Arranged at the half-way point of device 1 is an inspection station 5 with a co-acting lighting station 12. The lighting station 12 is positioned such that it lights bottles 2 via the base, while the inspection unit 5 can for example be provided with a video camera for observation of the image of this base. The rotation of the objects at the location of the checking station 5 can have the advantage that an inspection device that may be to the side of the path of the bottles at the location of the feed-through means can observe each bottle once in its entirety.

As shown in fig. 1, the device 1 is provided with an infeed deflection element 13 and a discharge deflection element 14 for respective feeding in and discharging of the objects in tangential direction.

Since the discharge of the rotating objects is particularly critical because of the occurrence of centrifugal forces, the objects 2 are still in contact at the location of the input zone of the discharge deflection element 14 with wheel 7, 8, 10, 11 and the arcuate guiding member 9. This is of particular importance at high conveying speeds.

### Claims

1. Device for conveying supplied rotational symmetrical objects, for instance bottles, over a certain distance, such that their bottom is free, for example to allow a light to be shone through it for inspection purposes, characterized by a wheel (7,8) and an arcuate guiding member (9) concentric to said wheel and exerting together therewith a clamping force on the envelope surface of said supplied objects (2).

2. Device as claimed in claim 1, characterized in that the wheel (7, 8) is covered with a resilient layer (10, 11).

3. Device as claimed in claim 1, characterized in that the guiding member (9) is covered with a resilient layer.

4. Device as claimed in any of the foregoing claims for handling at least partially cylindrical objects, characterized in that the wheel (7, 8) and the guiding member (9) together grip said objects (2) on their cylindrical surfaces such that there is substantially no tilting moment exerted on said objects.

5. Device as claimed in claim 4, characterized in that the wheel comprises two coaxially positioned discs (7, 8).

6. Device as claimed in claim 2 or 3, characterized in that the resilient layer (10, 11) is formed as a hollow strip of rubber-like material, for example natural rubber.

7. Device as claimed in any of the foregoing claims, characterized by means for setting the rotation speed of the wheel (7, 8).

8. Device as claimed in claim 7, characterized in that the setting means comprise a motor (6).

9. Device as claimed in claim 8, characterized in that the motor (6) is adjustable.

10. Device as claimed in claim 7, characterized in that the setting means comprise a brake.

11. Device as claimed in any of the claims 1-10, characterized by an infeed guide member (13) for tangential infeed of the objects.

12. Device as claimed in any of the claims 1-10, characterized by a discharge guide member (14) for tangential discharge of the objects.

13. Device as claimed in claim 12, characterized in that at the location of the input zone of the discharge guiding member (14) the objects (12) are still in contact with the wheel (7, 8) and the arcuate guiding member (9).

### Revendications

1. Appareil de transport d'objets, possédant une symétrie de rotation, par exemple de bouteilles, sur une certaine distance, de manière que leur fond soit dégagé, et permette par exemple le passage de lumière permettant une inspection, caractérisé par une roue (7, 8) et un organe courbe de guidage (9) concentrique à la roue et exerçant avec elle une force de serrage sur la surface de l'enveloppe des objets transmis (2).

2. Appareil selon la revendication 1, caractérisé en ce que la roue (7, 8) est recouverte d'une couche élastique (10, 11).

3. Appareil selon la revendication 1, caractérisé en ce que l'organe de guidage (9) est recouvert d'une couche élastique.

4. Appareil selon l'une quelconque des revendications précédentes, destiné à la manutention d'objets au moins partiellement cylindriques et caractérisé en ce que la roue (7, 8) et l'organe de guidage (9) serrent ensemble les objets (2) par leur surface cylindrique de manière que les objets ne subissent pratiquement aucun mouvement de basculement.

5. Appareil selon la revendication 4, caractérisé en ce que la roue comporte deux disques (7, 8) placés coaxialement.

6. Appareil selon la revendication 2 ou 3, caractérisé en ce que la couche élastique (10, 11) est formée d'une bande creuse d'un matériau analogue à du caoutchouc, par exemple de caoutchouc naturel.

7. Appareil selon l'une quelconque des revendications précédentes, caractérisé par un dispositif de réglage de la vitesse de rotation de la roue (7, 8).

8. Appareil selon la revendication 7, caractérisé en ce que le dispositif de réglage comporte un moteur (6).

9. Appareil selon la revendication 8, caractérisé en ce que le moteur (6) est réglable.

10. Appareil selon la revendication 7, caractérisé en ce que le dispositif de réglage comporte un frein.

11. Appareil selon l'une quelconque des revendications 1 à 10, caractérisé par un organe (13) de guidage d'alimentation destiné à assurer l'entrée tangentielle des objets.

12. Appareil selon l'une quelconque des revendications 1 à 10, caractérisé par un organe (14) de guidage d'évacuation destiné à assurer l'évacuation tangentielle des objets.

13. Appareil selon la revendication 12, caractérisé en ce que, à l'emplacement de la zone d'entrée de l'organe (14) de guidage d'évacuation, les objets (2) sont encore au contact de la roue (7, 8) et de l'organe courbe de guidage (9).

**Patentansprüche**

1 . Vorrichtung zum Transport von rotationssymmetrischen Transportgütern, insbesondere Flaschen, über eine definierte Wegstrecke, wobei ihr Bodenteil derart frei ist, daß es z.B. zu Kontrollzwecken mit Licht durchleuchtet werden kann, gekennzeichnet durch ein Rad (7, 8) und ein bogenförmiges, konzentrisch zum Rad (7, 8) verlaufendes Führungsteil (9), die durch eine auf die Umfangsfläche der Transportgüter (2) wirkende Reibkraft zusammenwirken.

2. Vorrichtung nach Anspruch 1, dadurch gekennzeichnet, daß das Rad (7, 8) mit einer federnden Schicht (10,11) überzogen ist.

3. Vorrichtung nach Anspruch 1, dadurch gekennzeichnet, daß das Führungsteil (9) mit einer federnden Schicht (10, 11) überzogen ist.

4. Vorrichtung nach einem oder mehreren der vorhergehenden Ansprüche zum Handhaben von zumindest teilweise zylindrischen Objekten, dadurch gekennzeichnet, daß das Rad (7, 8) und das Führungsteil (9) zusammen Objekte (2) an ihrer zylindrischen Oberfläche derart greifen, daß auf Dauer kein Kippmoment auf die Objekte wirkt.

5. Vorrichtung nach Anspruch 4, dadurch gekennzeichnet, daß das Rad (7, 8) aus zwei koaxial positionierten Scheiben gebildet ist.

6. Vorrichtung nach Anspruch 2 oder 3 dadurch gekennzeichnet, daß die federnde Beschichtung (10, 11) als hohler Streifen aus einem gummiartigen Material, beispielsweise Naturkautschuk, geformt ist.

7. Vorrichtung nach einem oder mehreren der vorhergehenden Ansprüche, gekennzeichnet durch Mittel zur Einstellung der Drehgeschwindigkeit des Rades (7, 8).

8. Vorrichtung nach Anspruch 7, dadurch gekennzeichnet, daß die Einstellmittel einen Motor (6) beinhalten.

9. Vorrichtung nach Anspruch 8, dadurch gekennzeichnet, daß der Motor (6) regelbar ist.

10. Vorrichtung nach Anspruch 7, dadurch gekennzeichnet, daß die Einstellmittel eine Bremse beinhalten.

11. Vorrichtung nach einem der Ansprüche 1 bis 10, gekennzeichnet durch ein Zustellelement (13) für den tangentialen Vorschub der Objekte.

12. Vorrichtung nach Anspruch 1 bis 10, gekennzeichnet durch ein Entladeführungsteil (14) zur tangentialen Entsorgung der Objekte.

13. Vorrichtung nach Anspruch 12, gekennzeichnet durch eine Anordnung des Entladeführungsteils (14), bei der die Objekte (2) noch in Kontakt mit dem Rad (7, 8) und dem bogenförmigen Führungsteil (9) sind.

FIG.1

FIG. 2

FIG.3